# EUROPEAN PATENT APPLICATION

(11) **EP 4 773 415 A1**
(43) Date of publication of application: **08.07.2026**
(21) Application number: 25845058.4
(22) Date of filing: 11.07.2025
(51) Int. Cl.: H01M 50/538, H01M 10/04

(54) **BATTERY, BATTERY PACK AND VEHICLE INCLUDING SAME**

(30) Priority: 23.07.2024 KR 20240097273; 10.07.2025 KR 20250093239
(71) Applicant: LG Energy Solution, Ltd., Seoul 07335 (KR)
(72) Inventor: LEE, Byoung-Gu, Daejeon 34122 (KR); KIM, Hyoung-Kwon, Daejeon 34122 (KR)
(74) Representative: Goddar, Heinz J.
(86) International application number: PCT/KR2025/010194
(87) International publication number: WO 2026/023962

(57) **Abstract**

A battery according to the present disclosure includes an electrode assembly including a first electrode and a second electrode wound around a central axis of a winding center hole with a separator interposed between the first electrode and the second electrode; a can housing accommodating the electrode assembly; an electrode terminal electrically connected to the electrode assembly; and a first current collector plate electrically connecting the electrode assembly to the electrode terminal, wherein the first current collector plate is coupled to the electrode terminal by surface-to-surface welding and has at least one communication hole for communication between an inside of the can housing and the winding center hole.

## Description

### TECHNICAL FIELD

The present disclosure relates to a battery, a battery pack and a vehicle including the same, and more particularly, to a battery with improved process of inserting an electrode assembly, a battery pack and a vehicle including the same.

This application is based on and claims priority from Korean Patent Application No. 10-2024-0097273 filed on July 23, 2024 and Korean Patent Application No. 10-2025-0093239 filed on July 10, 2025, the disclosures of which are incorporated herein in its entirety by reference.

### BACKGROUND ART

Due to being easily applicable to different types of products and having electrical properties such as high energy density, secondary batteries are commonly applied to not only portable devices but also electric vehicles (EV) or hybrid electric vehicles (HEV) that operate using electrical driving sources. Secondary batteries significantly reduce the use of fossil fuels, and in addition to the primary advantage, they do not generate by-products from the use of energy. From this perspective, secondary batteries are gaining attention as a new source of energy for improved eco-friendliness and energy efficiency.

A plurality of batteries may be connected in series/in parallel to form a battery pack according to the charge/discharge capacity of the battery pack required for Electric Vehicles (EV) or Hybrid Electric Vehicles (HEV). In this instance, it is general to form a battery module including at least one battery and then form a battery pack or a battery rack using at least one battery module with an addition of other elements. Alternatively, recently, cell-to-pack type battery packs are manufactured by directly receiving a plurality of batteries in a pack housing without modularization.

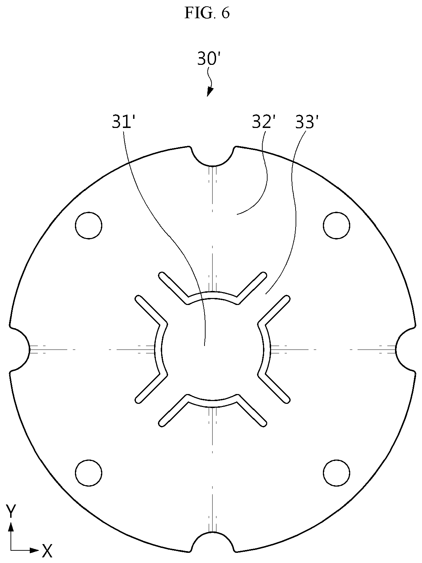

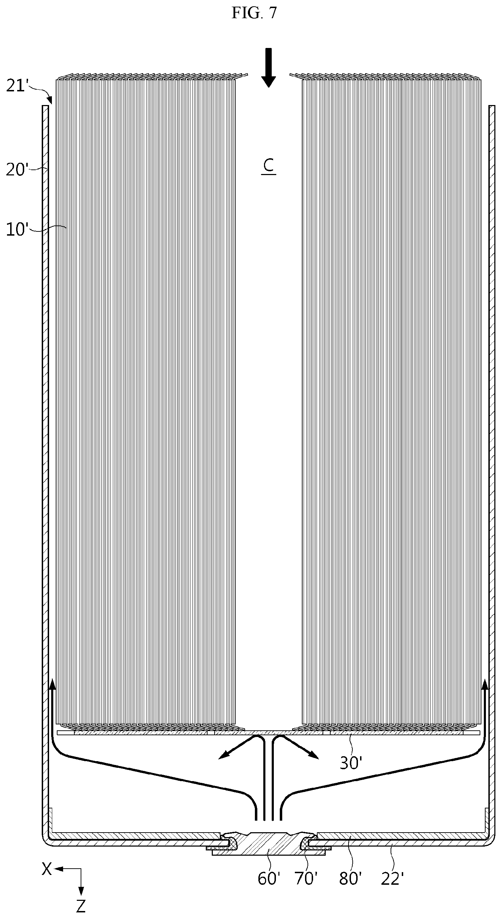

Meanwhile, referring to FIGS. 6 and 7, in the case of an existing battery, to weld an electrode terminal 60' and a current collector plate 30', the current collector plate 30' is designed to cover most of a core C of an electrode assembly 10'. The current collector plate 30' is joined to the electrode assembly 10' by welding, and the electrode assembly 10' combined with the current collector plate 30' is inserted into a can housing 20', and in this instance, the current collector plate 30' covers the core of the electrode assembly 10', making it difficult for a fluid, for example, air inside the can housing 20' to flow out of the electrode assembly 10' and the can housing 20'. As a result, in the existing battery, the process of inserting the electrode assembly 10' into the can housing 20' deteriorates. Meanwhile, to solve this problem, a gap may be formed between the outer diameter of the electrode assembly 10' and the inner diameter of the can housing 20' to allow the fluid, for example, air to escape, but in this case, the volume of the electrode assembly 10' is reduced, resulting in lower energy density of the battery.

Therefore, there is an urgent need for development of batteries for improving the process of inserting the electrode assembly into the can housing and increasing energy density.

### DISCLOSURE

### Technical Problem

The present disclosure is designed to address the above-described problems, and therefore the present disclosure is directed to providing a battery with improved process of inserting an electrode assembly into a can housing, a battery pack and a vehicle including the same.

The present disclosure is further directed to providing a battery with improved productivity, a battery pack and a vehicle including the same.

The present disclosure is further directed to providing a battery with improved energy density, a battery pack and a vehicle including the same.

The technical problems to be solved by the present disclosure are not limited to the above-described problems, and these and other problems will be clearly understood by those skilled in the art from the following description.

### Technical Solution

A battery according to the present disclosure includes an electrode assembly including a first electrode and a second electrode wound around a central axis of a winding center hole with a separator interposed between the first electrode and the second electrode; a can housing accommodating the electrode assembly; an electrode terminal electrically connected to the electrode assembly; and a first current collector plate electrically connecting the electrode assembly to the electrode terminal, wherein the first current collector plate is coupled to the electrode terminal by surface-to-surface welding and has at least one communication hole for communication between an inside of the can housing and the winding center hole.

The electrode terminal may be electrically connected to a first electrode of a first polarity, and the first current collector plate may electrically connect the first electrode to the electrode terminal.

The electrode terminal may run through a closed portion of the can housing such that at least a part of the electrode terminal protrudes into the can housing, the first current collector plate may include a first coupling portion that is coupled to at least the part of the electrode terminal protruding into the can housing by surface-to-surface welding, and the communication hole may be present in the first coupling portion.

The first current collector plate may further include a second coupling portion that is coupled to the electrode assembly; and a bridge connecting the first coupling portion to the second coupling portion, and the communication hole may be spaced apart from the bridge.

At least a part of the communication hole may be positioned at a location corresponding to an inner side of an inner circumference of the winding center hole.

The communication hole may have a circular shape.

The communication hole may have a polygonal shape.

The communication hole may include a plurality of communication holes.

The plurality of communication holes may be arranged symmetrically with respect to the first current collector plate.

The communication hole may be slit-shaped.

The electrode terminal may run through a closed portion of the can housing such that at least a part of the electrode terminal protrudes into the can housing, the first current collector plate may include a first coupling portion that is coupled to at least the part of the electrode terminal protruding into the can housing by surface-to-surface welding, and the communication hole may extend inward from an outer circumference of the first coupling portion.

A battery pack according to the present disclosure includes at least one battery according to the present disclosure.

A vehicle according to the present disclosure includes at least one battery pack according to the present disclosure.

### Advantageous Effects

According to the present disclosure, it may be possible to provide the battery in which the fluid escapes the can housing quickly when the electrode assembly inserts into the can housing, thereby improving the process of inserting the electrode assembly into the can housing, and the battery pack and the vehicle including the same.

In addition, according to an aspect of the present disclosure, as the process of inserting the electrode assembly into the can housing is improved, it may be possible to provide the battery with improved productivity, the battery pack and the vehicle including the same.

In addition, according to an aspect of the present disclosure, as the fluid may escape the can housing quickly when the electrode assembly inserts into the can housing, it may be possible to minimize the unnecessary tolerance between the electrode assembly and the can housing, thereby providing the battery with improved energy density, the battery pack and the vehicle including the same.

The effects of the present disclosure are not limited to the above-described effects, and these and other effects will be clearly understood by those skilled in the art from this specification and the accompanying drawings.

### BRIEF DESCRIPTION OF THE DRAWINGS

The accompanying drawings illustrate embodiments of the present disclosure and together with the following detailed description, serve to provide a better understanding of the technical aspects of the present disclosure, and thus the present disclosure should not be construed as being limited to any of the drawings.
FIG. 1 is a perspective view showing the overall appearance of a battery according to an embodiment of the present disclosure.
FIG. 2 is a side cross-sectional view showing the entire inside of a battery according to an embodiment of the present disclosure.
FIG. 3 is a diagram showing an unfolded view of an electrode that may be applied to a battery according to an embodiment of the present disclosure.
FIG. 4 is a plan view showing a first current collector plate of a battery according to an embodiment of the present disclosure.
FIG. 5 is a side cross-sectional view illustrating a process of inserting an electrode assembly into a can housing in a battery according to an embodiment of the present disclosure.
FIG. 6 is a plan view showing a current collector plate of an existing battery.
FIG. 7 is a side cross-sectional view illustrating a process of inserting an electrode assembly into a can housing in an existing battery.
FIG. 8 is a side cross-sectional view showing a part of a battery according to a variation of an embodiment of the present disclosure.
FIG. 9 is a plan view showing a communication hole having a polygonal shape in a first current collector plate according to an embodiment of the present disclosure.
FIG. 10 is a plan view showing a first current collector plate according to another embodiment of the present disclosure.
FIG. 11 is a plan view showing a first current collector plate according to still another embodiment of the present disclosure.
FIG. 12 is a diagram showing a battery pack according to an embodiment of the present disclosure.
FIG. 13 is a diagram showing a vehicle according to an embodiment of the present disclosure.

### BEST MODE

Hereafter, embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure and are not intended to be limiting, so it should be understood that a variety of other equivalents and modifications could be made thereto at the time the application was filed.

Additionally, the present disclosure includes many different embodiments. The description of substantially identical or similar elements in each embodiment is omitted to avoid redundancy, and differences will be described.

In this specification, unless otherwise specified, an X-axis direction and a Y-axis direction may be the left-right direction and the front-rear direction, or the front-rear direction and the left-right direction, respectively, and a Z-axis direction perpendicular to an X-Y plane may be the top-bottom direction (vertical direction).

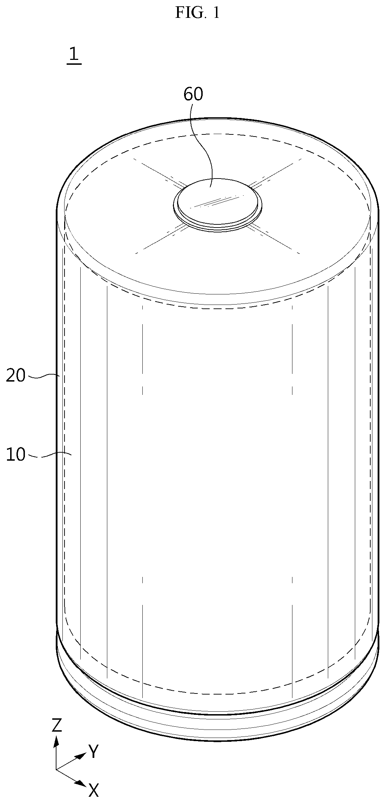

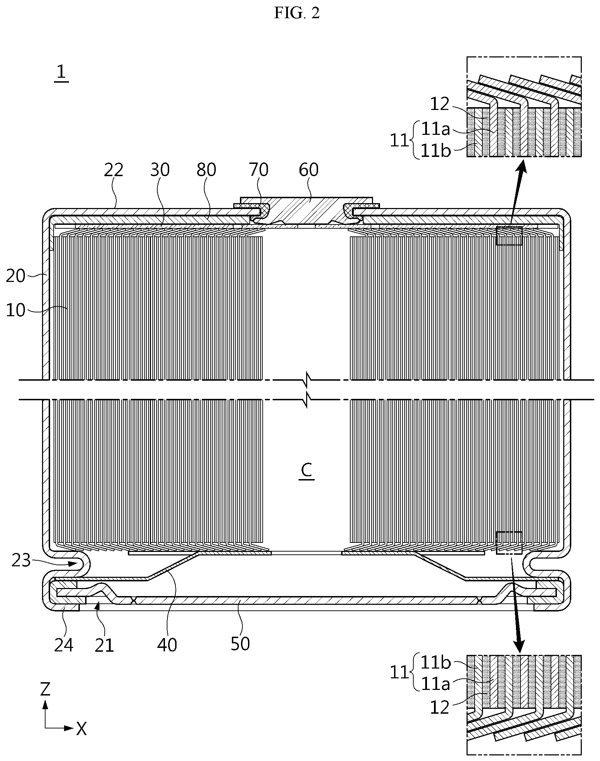

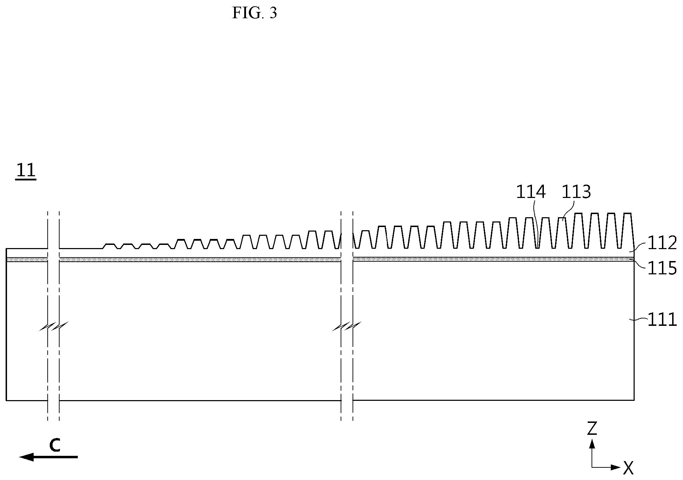

FIG. 1 is a perspective view showing the overall appearance of a battery according to an embodiment of the present disclosure, FIG. 2 is a side cross-sectional view showing the entire inside of the battery according to an embodiment of the present disclosure, and FIG. 3 is a diagram showing an unfolded view of an electrode that may be applied to the battery according to an embodiment of the present disclosure.

Hereinafter, the battery 1 according to an embodiment of the present disclosure will be described with reference to FIGS. 1 to 3. The battery 1 according to an embodiment of the present disclosure may include an electrode assembly 10, a can housing 20, an electrode terminal 60 and a first current collector plate 30.

The battery 1 may be a secondary battery configured to charge and discharge. For example, the battery 1 may be a cylindrical battery.

The electrode assembly 10 may include an electrode 11 and a separator 12. The electrode 11 may include electrodes 11 of different polarities. Specifically, the electrode 11 may include a first electrode 11a and a second electrode 11b. The first electrode 11a may have a first polarity, and the second electrode 11b may have a second polarity that is opposite to the first polarity. For example, the first polarity may be positive and the second polarity may be negative. The separator 12 may be interposed between the electrodes 11 of different polarities. The separator 12 may be interposed between the first electrode 11a and the second electrode 11b. The separator 12 may be an insulator.

The electrode assembly 10 may have a jelly-roll structure. That is, the electrode assembly 10 may be manufactured by stacking the sheet-shaped first electrode 11a and the sheet-shaped second electrode 11b at least one time with the separator 12 interposed between them to form a stack and winding the stack around a winding center hole C. The jelly-roll structure is not limited to a particular one and the present disclosure may include any jelly-roll structure known in the art.

The electrode 11 may have a coated portion 111 and an uncoated portion 112. The coated portion 111 may be where an active material layer is stacked on at least one surface of the electrode 11. For example, a positive electrode active material may be stacked on the coated portion 111 of the first electrode 11a, and a negative electrode active material may be stacked on the coated portion 111 of the second electrode 11b.

The uncoated portion 112 may be a part of the electrode 11 where an active material is not stacked. The electrode 11 may have a predetermined length and width, and the uncoated portion 112 may be formed on one longer side of the electrode 11. For example, as shown in FIG. 3, the uncoated portion 112 may be formed on the longer side in the Z-axis direction. The uncoated portion 112 of the first electrode 11a may be formed on the longer side in the +Z direction as shown in FIG. 3. The uncoated portion 112 of the second electrode 11b may be formed on the longer side in the -Z direction unlike FIG. 3.

At least a part of the uncoated portion 112 may be exposed to the outside of the separator 12. The uncoated portion 112 may be used as an electrode 11 tab.

The uncoated portion 112 may include a plurality of foil tabs 113. The foil tabs 113 may be exposed to the outside of the separator 12. The plurality of foil tabs 113 may be arranged in a line from the winding center hole C toward the outer circumference (for example, in the +X direction in FIG. 3). The plurality of foil tabs 113 may be formed by at least one notching portion 114 formed by notching.

The electrode 11 may include an insulating coating portion 115. The insulating coating portion 115 may be positioned at the boundary between the uncoated portion 112 and the coated portion 111. The insulating coating portion 115 may be provided when the electrode 11 is the first electrode 11a, and may prevent direct contact between the coated portions 111 of the first electrode 11a and the second electrode 11b.

The preceding and following description of the electrode 11 may be shared between the first electrode 11a and the second electrode 11b unless otherwise stated.

The can housing 20 may accommodate the electrode assembly 10. The can housing 20 may have an internal space in which the electrode assembly 10 may be housed. The can housing 20 may be, for example, provided in the shape of a hollow cylinder in which the electrode assembly 10 may be housed.

The can housing 20 may include an open portion 21 and a closed portion 22. The open portion 21 may be present on one side of the can housing 20. For example, the open portion 21 may be formed at one end portion (for example, -Z direction side) of the can housing 20. The electrode assembly 10 may be inserted into the can housing 20 through the open portion 21. The closed portion 22 may be formed at the other end portion (for example, +Z direction side) of the can housing 20. That is, the closed portion 22 may be formed opposite the open portion 21.

The can housing 20 may include a conductive metal. For example, the can housing 20 may include at least one of aluminum, stainless steel or nickel-plated steel.

The electrode terminal 60 may be a terminal that is electrically connected to the electrode assembly 10. The electrode terminal 60 may run through the closed portion 22. At least a part of the electrode terminal 60 may be exposed to the outside of the closed portion 22. The electrode terminal 60 may protrude in a state that at least a part of the electrode terminal 60 is exposed to the outside of the closed portion 22. The electrode terminal 60 may be provided in a shape of a rivet. The electrode terminal 60 may be riveted to the closed portion 22.

The first current collector plate 30 may be configured to electrically connect the electrode assembly 10 to the electrode terminal 60. The first current collector plate 30 may be electrically and physically positioned between the electrode assembly 10 and the electrode terminal 60. The first current collector plate 30 may be electrically connected to each of the electrode assembly 10 and the electrode terminal 60. The first current collector plate 30 may be coupled to each of the electrode assembly 10 and the electrode terminal 60 by welding. The first current collector plate 30 may be coupled to the plurality of foil tabs 113 by welding.

The first current collector plate 30 combined with the electrode assembly 10 may be inserted into the can housing 20 together with the electrode assembly 10.

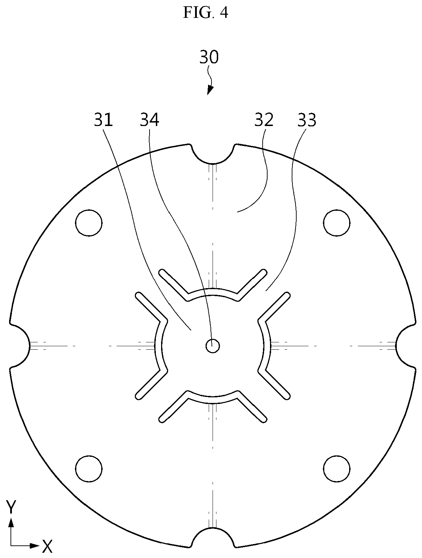

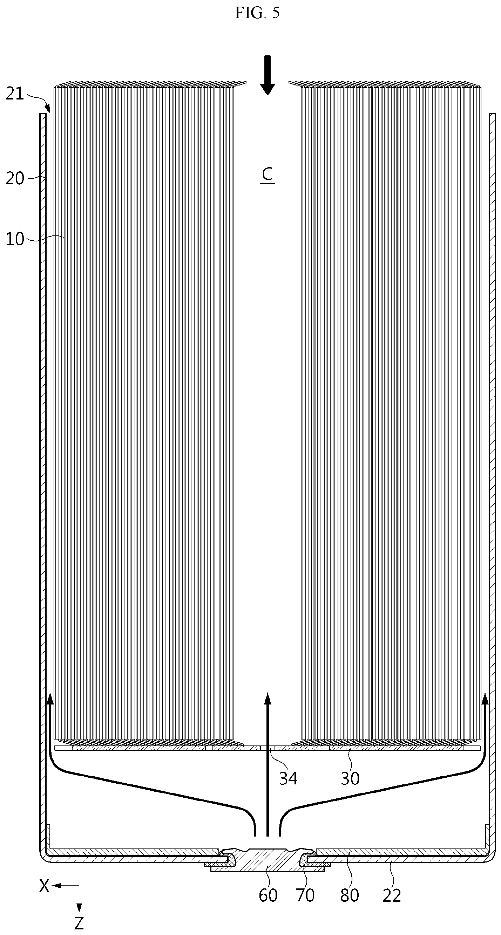

FIG. 4 is a plan view showing the first current collector plate of the battery according to an embodiment of the present disclosure, FIG. 5 is a side cross-sectional view illustrating the process of inserting the electrode assembly into the can housing in the battery according to an embodiment of the present disclosure, FIG. 6 is a plan view showing the current collector plate of the existing battery, and FIG. 7 is a side cross-sectional view illustrating the process of inserting the electrode assembly into the can housing in the existing battery.

Hereinafter, the first current collector plate 30 of the battery 1 according to an embodiment of the present disclosure will be described in more detail with reference to FIGS. 4 and 5.

The first current collector plate 30 may be coupled to the electrode terminal 60 by surface-to-surface welding. That is, the first current collector plate 30 may be coupled to the electrode terminal 60 by welding two surfaces that are brought into surface-to-surface contact over a predetermined area. The welding method is not limited to a particular one and may include any welding method, for example, laser welding or ultrasonic welding.

The first current collector plate 30 may have at least one communication hole 34. The communication hole 34 may be configured to allow for communication between the can housing 20 and the winding center hole C of the electrode assembly 10. Specifically, when inserting the electrode assembly 10 into the can housing 20, a space may be formed between the closed portion 22 of the can housing 20 and the electrode assembly 10, and the communication hole 34 may be a hole for communication between the space and the winding center hole C.

The communication hole 34 may be disposed approximately at the central portion of the first current collector plate 30 to match it with the winding center hole C. The communication hole 34 may have a proper size to ensure a sufficient welding area for the surface-to-surface welding between the electrode terminal 60 and the first current collector plate 30. For example, the size of the communication hole 34 may be preferably smaller than the welding area between the electrode terminal 60 and the first current collector plate 30.

Referring to FIGS. 6 and 7, the current collector plate 30' of the existing battery does not have the communication hole 34 of the present disclosure. That is, the current collector plate 30' may include a first coupling portion 31', a second coupling portion 32' and a bridge 33', but does not have the equivalent to the communication hole, so the current collector plate 30' completely blocks the winding center hole C of the electrode assembly 10'. Accordingly, when the electrode assembly 10' combined with the current collector 30' is pushed into the can housing 20', the pressure in the space between the electrode assembly 10' and the can housing 20' may increase excessively. In this case, the process of inserting the electrode assembly 10' into the can housing 20' may deteriorate, and in severer cases, at least one of the current collector 30', the electrode assembly 10' or the can housing 20' may be damaged. To suppress the excessive pressure rise, the existing battery may be designed to form a predetermined tolerance between the outer circumferential portion of the electrode assembly 10' and the inner circumferential portion of the can housing 20' to allow a fluid to escape between them. However, in this case, the size of the electrode assembly 10' may be reduced, resulting in lower energy density of the battery.

Referring back to FIGS. 4 and 5, because the first current collector plate 30 is configured to have at least one communication hole 34 as described above, the battery 1 according to an embodiment of the present disclosure may improve the insertion process of the battery 1. Specifically, the battery 1 according to the present disclosure may be manufactured by coupling the first current collector plate 30 to the electrode assembly 10, and inserting the electrode assembly 10 combined with the first current collector plate 30 into the can housing 20 through the open portion 21. In this instance, when the electrode assembly 10 is inserted into the can housing 20, the fluid, for example, air inside the can housing 20 may flow out of the winding center hole C through the at least one communication hole 34 of the first current collector plate 30 quickly. Accordingly, it may be possible to prevent the excessive pressure rise in the space between the electrode assembly 10 and the can housing 20 when pushing the electrode assembly 10 into the can housing 20, thereby improving the process of inserting the electrode assembly 10 into the can housing 20.

Additionally, because the process of inserting the electrode assembly 10 is improved, productivity of the battery 1 may be improved.

In addition, it may be possible to minimize the unnecessary tolerance between the outer circumferential portion of the electrode assembly 10 and the inner circumferential portion of the can housing 20, thereby maximizing the size of the electrode assembly 10 within the can housing 20 of the limited size, leading to improved energy density of the battery 1.

Meanwhile, the battery 1 according to an embodiment of the present disclosure may further include at least one of a second current collector plate 40, an insulating gasket 70 or an insulator 80. The second current collector plate 40 may be configured to electrically connect the electrode assembly 10 to the can housing 20. The second current collector plate 40 may be electrically and physically positioned between the electrode assembly 10 and the can housing 20. The second current collector plate 40 may be electrically connected to each of the electrode assembly 10 and the can housing 20. The second current collector plate 40 may be coupled to each of the electrode assembly 10 and the can housing 20 by welding. The second current collector plate 40 may be coupled to the plurality of foil tabs 113 by welding. The insulating gasket 70 may be positioned between the electrode terminal 60 and the closed portion 22. The insulating gasket 70 may be configured to insulate the electrode terminal 60 from the closed portion 22. The insulator 80 may be positioned between the electrode assembly 10 and the can housing 20. The insulator 80 may be positioned between the other end portion of the electrode assembly 10 and the lower surface of the closed portion 22. The insulator 80 may be configured to insulate the electrode assembly 10 from the can housing 20.

Meanwhile, another battery 1 according to an embodiment of the present disclosure may further include a cap plate 50, and the can housing 20 may further include a beading portion 23 and a crimping portion 24. The beading portion 23 may be recessed from a side adjacent to the open portion 21 of the can housing 20. The beading portion 23 may fix the electrode assembly 10. The crimping portion 24 may be extended and bent from the open portion 21-side end portion of the can housing 20 toward the open portion 21. The open portion 21 of the can housing 20 may be covered by the cap plate 50, and the crimping portion 24 may fix and seal the cap plate 50.

The electrode terminal 60 may be electrically connected to the first electrode 11a having the first polarity. Accordingly, the electrode terminal 60 may have the first polarity. The electrode terminal 60 may have the positive polarity and be a positive electrode terminal. The positive electrode terminal may be referred to as a first terminal.

The first current collector plate 30 may electrically connect the first electrode 11a to the electrode terminal 60. Accordingly, the first current collector plate 30 may have the first polarity. The first current collector plate 30 may have the positive polarity and be a positive current collector plate.

Meanwhile, the second current collector plate 40 may electrically connect the second electrode 11b to the can housing 20. Accordingly, the second current collector plate 40 may have the second polarity. The second current collector plate 40 may have the negative polarity and be a negative current collector plate. In addition, the can housing 20 may have the negative polarity by the second current collector plate 40. In particular, the closed portion 22 excluding the electrode terminal 60 may have the negative polarity and be a negative electrode terminal. The negative electrode terminal may be referred to as a second terminal.

The battery 1 according to the present disclosure may have the first terminal and the second terminal on any one side of the battery 1 (for example, +Z direction side), thereby easily forming an electrical connection structure for forming a battery pack.

The electrode terminal 60 may run through the closed portion 22 of the can housing 20 such that at least a part of the electrode terminal 60 may protrude into the can housing 20. That is, when the electrode terminal 60 runs through the closed portion 22, at least a part of the electrode terminal 60 may protrude toward the inside of the can housing 20.

The first current collector plate 30 may include a first coupling portion 31. The first coupling portion 31 may be a portion that is coupled to the electrode terminal 60. The first coupling portion 31 may be coupled to the electrode terminal 60 by surface-to-surface welding. Specifically, the first coupling portion 31 may be coupled to at least the part of the electrode terminal 60 protruding into the can housing 20 by surface-to-surface welding.

At least a part of the first coupling portion 31 may be spaced apart from the remaining portion of the first current collector plate 30.

The first coupling portion 31 may be disposed approximately at the central portion of the first current collector plate 30. The electrode terminal 60 may be positioned at a location corresponding to the winding center hole C, and the first coupling portion 31 may be positioned at a location corresponding to the electrode terminal 60. Accordingly, the first coupling portion 31 may be positioned at a location corresponding to the winding center hole C.

The communication hole 34 may be formed in the first coupling portion 31. The communication hole 34 may be formed approximately at the center of the first coupling portion 31.

When the first current collector plate 30 includes the first coupling portion 31, the first coupling portion 31 may be separated from the remaining portion of the first current collector plate 30, thereby preventing the direct transfer of welding heat between the first coupling portion 31 and the remaining portion excluding the first coupling portion 31. In addition, when the communication hole 34 is formed in the first coupling portion 31, the fluid inside the can housing 20 may be released through the winding center hole C quickly.

The first current collector plate 30 may further include a second coupling portion 32 and a bridge 33.

The second coupling portion 32 may be a portion that is coupled to the electrode assembly 10. The second coupling portion 32 may be coupled to the first electrode 11a. The second coupling portion 32 may be coupled to the foil tabs 113 of the first electrode 11a by welding.

The bridge 33 may connect the first coupling portion 31 to the second coupling portion 32. The bridge 33 may extend toward the first coupling portion 31 and the second coupling portion 32. The bridge 33 may include at least one bridge, and may include a plurality of bridges. A current path to the first coupling portion 31 and the second coupling portion 32 may be formed.

The communication hole 34 may be spaced apart from the bridge 33. In this case, it may be possible to prevent the reduction in the cross-sectional area of the current path formed in the bridge 33 due to the communication hole 34.

The first coupling portion 31 and the second coupling portion 32 may be spaced apart from each other in the remaining area excluding the bridge 33. A gap or slit may be formed between the first coupling portion 31 and the second coupling portion 32 excluding the bridge 33.

When the first current collector plate 30 further includes the second coupling portion 32 and the bridge 33, the portion of the first current collector plate 30 that is coupled to the electrode terminal 60 and the portion of the first current collector plate that is coupled to the electrode assembly 10 may be separated more clearly, and at the same time, the current path between the first coupling portion 31 and the second coupling portion 32 may be easily formed.

At least a part of the communication hole 34 may be disposed at a location corresponding to the inner side of the inner circumference of the winding center hole C. That is, the communication hole 34 may be positioned inside the winding central hole C when viewed from the central axis direction of the winding center hole C or the Z-axis direction.

When the communication hole 34 is formed as described above, the fluid inside the can housing 20 may be released through the winding center hole C more quickly, and the influence of interference of the electrode assembly 10 during the release of the fluid may be minimized, thereby further improving the process of inserting the electrode assembly 10 into the can housing 20.

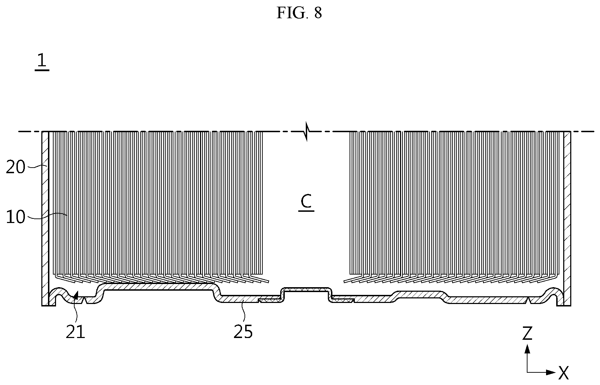

FIG. 8 is a side cross-sectional view showing a part of the battery according to a variation of an embodiment of the present disclosure.

The battery 1 according to the variation of the embodiment of the present disclosure may further include a can lid 25. Specifically, as shown in FIG. 2, in the battery 1 according to the previous embodiment of the present disclosure, the open portion 21 of the can housing 20 may be closed in a way that the cap plate 50 is sealed by the beading portion 23 and the crimping portion 24 of the can housing 20. In the battery 1 according to the variation of the embodiment of the present disclosure, the can housing 20 may not include the beading portion 23 and the crimping portion 24, and the open portion 21 may be closed through the can lid 25 instead of the cap plate 50. The can lid 25 may be coupled to the open portion 21-side end portion of the can housing 20 by welding.

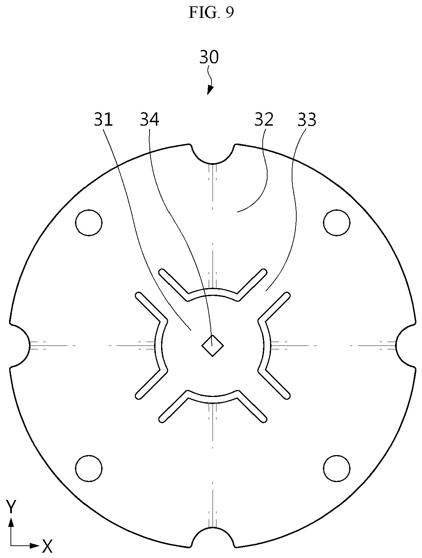

FIG. 9 is a plan view showing the communication hole 34 having a polygonal shape in the first current collector plate according to an embodiment of the present disclosure.

Hereinafter, the communication hole 34 of the first current collector plate 30 will be described in more detail with reference to FIGS. 4 and 9.

The communication hole 34 may be formed with a circular shape as shown in FIG. 4. The communication hole 34 may be formed with an elliptical or oval shape rather than a perfectly circular shape.

The communication hole 34 may be formed with a polygonal shape as shown in FIG. 9. The polygonal shape may include, for example, square, rectangular or rhombus shapes as shown in FIG. 9. Alternatively, the polygonal shape may include a variety of polygonal shapes including triangular or pentagonal shapes.

As described above, the shape of the communication hole 34 may include various shapes including circular or polygonal shapes.

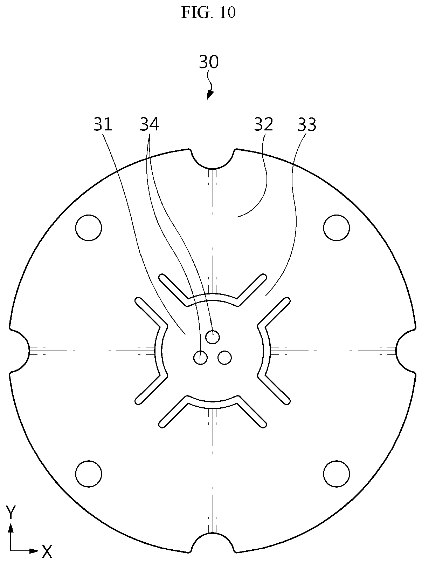

FIG. 10 is a plan view showing the first current collector plate according to another embodiment of the present disclosure.

Hereinafter, the first current collector plate 30 according to another embodiment of the present disclosure will be described in detail with reference to FIG. 10. The first current collector plate 30 according to another embodiment of the present disclosure may have a plurality of communication holes 34. That is, the plurality of communication holes 34 may be formed in the first current collector plate 30.

For example, as shown in FIG. 10, the first current collector plate 30 may have three communication holes 34. However, unlike FIG. 10, the first current collector plate 30 may have two or four or more communication holes 34.

In the case of the plurality of communication holes 34, when the electrode assembly 10 is inserted into the can housing 20, the fluid inside the can housing 20 may be released more quickly, thereby further improving the process of inserting the electrode assembly 10.

The plurality of communication holes 34 may be arranged in symmetry. Specifically, the plurality of communication holes 34 may be arranged symmetrically with respect to the center of the first current collector plate 30. Here, the center of the first current collector plate 30 may, for example, match the center of the winding center hole C.

When the plurality of communication holes 34 are arranged in symmetry, it may be possible to ensure the structural stability of the first current collector plate 30, and evenly release the fluid in the can housing 20 through the plurality of communication holes 34.

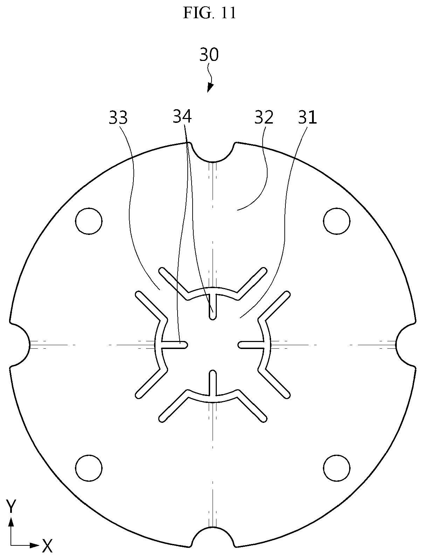

FIG. 11 is a plan view showing the first current collector plate according to still another embodiment of the present disclosure.

Hereinafter, the first current collector plate 30 according to still another embodiment of the present disclosure will be described in detail with reference to FIG. 11. The first current collector plate 30 according to still another embodiment of the present disclosure may have the slit-shaped communication hole 34.

The first current collector plate 30 may have at least one slit-shaped communication holes 34.

The communication hole 34 may extend inward from the outer circumference of the first coupling portion 31. For example, the communication hole 34 may be formed in the shape of a slit that extends inward from any location on the outer circumference of the first coupling portion 31 excluding the bridge 33, toward the central portion of the first current collector plate 30.

When the communication hole 34 is formed as described above, it may be possible to improve the process of inserting the first current collector plate 30, and at the same time, to reduce the length of the current path from the first current collector plate 30 to the electrode terminal 60.

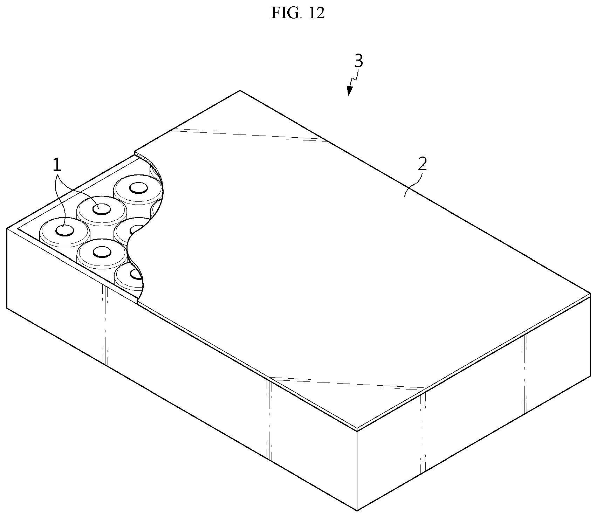

FIG. 12 is a diagram showing a battery pack according to an embodiment of the present disclosure.

Referring to FIG. 12, the battery pack 3 according to the present disclosure may include at least one battery cell 1 according to the present disclosure. The battery pack 3 may include a pack case 2 accommodating the at least one battery cell 1.

In the drawing, for the convenience of illustration, the components such as busbars for electrical connection of the battery cells 1, cooling units or external terminals are omitted. The structure of the plurality of battery cells 1 used to manufacture the battery pack 3 is the same as described previously.

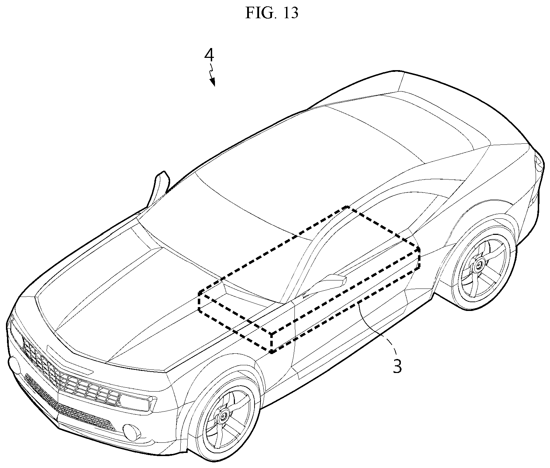

FIG. 13 is a diagram showing a vehicle according to an embodiment of the present disclosure.

Referring to FIG. 13, the battery pack 3 according to an embodiment of the present disclosure may be applied to the vehicle 4 such as an electric vehicle or a hybrid vehicle. That is, the vehicle 4 according to the present disclosure may include the battery pack 3 according to the present disclosure. The battery pack 3 may be installed in a vehicle body frame under a vehicle seat or a trunk space. In addition to the battery pack 3, the vehicle 4 according to the present disclosure may further include any other component included in the vehicle 4. For example, in addition to the battery pack 3 according to the present disclosure, the vehicle 4 according to an embodiment of the present disclosure may further include a vehicle body, a motor or a controller such as an electronic control unit (ECU).

In addition, in addition to the vehicle 4, the battery pack 3 according to the present disclosure may be used in any other device, apparatus and machine using secondary batteries, for example, energy storage systems.

In this specification, the terms indicating the directions such as up, down, left, right, front and rear are used, but these terms are for the purpose of convenience of description only, and it is obvious to those skilled in the art that the terms may differ depending on the location of an object or an observer.

Although the present disclosure has been hereinabove described with regard to certain embodiments and drawings, the present disclosure is not limited thereto, and it is obvious to persons having ordinary skill in the technical field pertaining to the present disclosure that a variety of modifications and change may be made within the technical aspects of the present disclosure and the appended claims and their equivalents.

### [List of Reference Numerals]

1: Battery
2: Pack case
3: Battery pack
4: Vehicle
10: Electrode assembly
11: Electrode
11a: First electrode
11b: Second electrode
111: Coated portion
112: Uncoated portion
113: Foil tab
114: Notching portion
115: Insulating coating portion
12: Separator
20: Can housing
21: Open portion
22: Closed portion
23: Beading portion
24: Crimping portion
25: Can lead
30: First current collection plate
31: First coupling portion
32: Second coupling portion
33: Bridge
34: Communication hole
40: Second current collection plate
50: Cap plate
60: Electrode terminal
70: Insulating gasket
80: Insulator
C: Winding center hole

## Claims

1. A battery comprising:
an electrode assembly including a first electrode and a second electrode wound around a central axis of a winding center hole with a separator interposed between the first electrode and the second electrode;
a can housing accommodating the electrode assembly;
an electrode terminal electrically connected to the electrode assembly; and
a first current collector plate electrically connecting the electrode assembly to the electrode terminal,
wherein the first current collector plate is coupled to the electrode terminal by surface-to-surface welding, and
wherein the first current collector plate has at least one communication hole for communication between an inside of the can housing and the winding center hole.

2. The battery according to claim 1,
wherein the electrode terminal is electrically connected to a first electrode of a first polarity, and
wherein the first current collector plate electrically connects the first electrode to the electrode terminal.

3. The battery according to claim 1,
wherein the electrode terminal runs through a closed portion of the can housing such that at least a part of the electrode terminal protrudes into the can housing,
wherein the first current collector plate includes:
a first coupling portion that is coupled to at least the part of the electrode terminal protruding into the can housing by surface-to-surface welding, and
wherein the communication hole is present in the first coupling portion.

4. The battery according to claim 3,
wherein the first current collector plate further includes:
a second coupling portion that is coupled to the electrode assembly; and
a bridge connecting the first coupling portion to the second coupling portion, and
wherein the communication hole is spaced apart from the bridge.

5. The battery according to claim 1,
wherein at least a part of the communication hole is positioned at a location corresponding to an inner side of an inner circumference of the winding center hole.

6. The battery according to claim 1,
wherein the communication hole has a circular shape.

7. The battery according to claim 1,
wherein the communication hole has a polygonal shape.

8. The battery according to claim 1,
wherein the communication hole includes a plurality of communication holes.

9. The battery according to claim 8,
wherein the plurality of communication holes is arranged symmetrically with respect to the first current collector plate.

10. The battery according to claim 1,
wherein the communication hole is slit-shaped.

11. The battery according to claim 10,
wherein the electrode terminal runs through a closed portion of the can housing such that at least a part of the electrode terminal protrudes into the can housing,
wherein the first current collector plate includes:
a first coupling portion that is coupled to at least the part of the electrode terminal protruding into the can housing by surface-to-surface welding, and
wherein the communication hole extends inward from an outer circumference of the first coupling portion.

12. A battery pack comprising at least one battery according to any one of claims 1 to 11.

13. A vehicle comprising at least one battery pack according to claim 12.
